# NEUE EUROPÄISCHE PATENTSCHRIFT

(11) **EP 0 708 127 B2**
(45) Veröffentlichungstag und Bekanntmachung des Hinweises auf die Entscheidung über den Einspruch: **10.11.2010**
(45) Hinweis auf die Patenterteilung: 09.05.2001
(21) Anmeldenummer: 95116216.3
(22) Anmeldetag: 14.10.1995
(51) Int. Cl.: C08G 18/76, C08G 18/48, C08G 101/00

(54) **Verfahren zur Herstellung von Polyurethan-Hartschaumstoffen mit einer verminderten Wärmeleitfähigkeit**
Process for the preparation of rigid polyurethane foams having reduced thermal conductivity
Procédé de préparation de mousses rigides de polyuréthane ayant une conductivité thermique réduite

(30) Priorität: 22.10.1994 DE 4437859
(43) Veröffentlichungstag der Anmeldung: 24.04.1996
(73) Patentinhaber: BASF Polyurethanes GmbH, 49448 Lemförde (DE)
(72) Erfinder: Ebert, Katrin, D-01987 Schwarzheide (DE); Fechner, Frank, D-49448 Lemförde (DE); Seifert, Holger, Dr., D-01705 Freital (DE)
(74) Vertreter: Langfinger, Klaus Dieter

(56) Entgegenhaltungen:
- EP-A- 0 397 378
- EP-A- 0 483 431
- EP-A2- 0 421 269
- EP-B1- 0 695 322
- WO-A1-00/05289
- WO-A1-94/25514
- FR-A- 1 270 810
- FR-A- 2 025 206
- US-A- 5 043 360
- CHEMICAL ABSTRACTS, vol. 112, no. 24, 11.Juni 1990 Columbus, Ohio, US; abstract no. 218084h, NAKAMOTO ET AL: "PHENOLIC URETHANE FOAM HEAT INSULATORS" Seite 41; XP002006128 & JP-A-01 301 729 (MATSUSHITA)
- 30th Annual Polyurethane Technical/Marketing Conference, October 15-17,1986, pages 393-398
- Conference Papers, Utech 88, 11/12/13 October, pages 119-122

## Beschreibung

Gegenstände der Erfindung sind ein Verfahren zur Herstellung von Polyurethan- - im folgenden abgekürzt PU genannt - Hartschaumstoffen mit einem Gehalt an aromatischen Resten von mindestens 32 Masse-% und dadurch weiter verminderter Wärmeleitfähigkeit, durch Umsetzung von a) organischen, vorzugsweise aromatischen Polyisocyanaten mit b) einem Polyether-polyol mit einer Funktionalität von 2 bis 8 und einer Hydroxylzahl von 100 bis 850, der hergestellt wird durch anionische Polyaddition von mindestens einem Alkylenoxid an mindestens eine, mindestens eine Hydroxyl-, Amino- und/oder Carboxylgruppen aufweisende aromatische Verbindung mit mindestens 2 reaktiven Wasserstoffatomen als Startermolekül, und gegebenenfalls c) niedermolekularen Kettenverlängerungs- und/oder Vernetzungsmitteln in Gegenwart von d) Treibmitteln aus Cyclopentan und Wasser, e) Katalysatoren und gegebenenfalls f) Zusatzstoffen und die Verwendung dieser PU-Hartschaumstoffe zum Ausschäumen von Hohlräumen in Kühlmöbeln oder Heizungselementen sowie als Dämmstoff für Verbundelemente.

Die Herstellung von Verbund- oder Sandwichelementen, die aufgebaut sind aus einem PU-Hartschaumstoff und mindestens einer Deckschicht aus einem starren oder elastischen Material, wie z.B. Papier, Kunststoffolien, Metallblechen, Glasvliesen, Spanplatten u.a., ist bekannt. Bekannt ist ferner die Ausschäumung von Hohlräumen in Haushaltsgeräten, wie Kühlmöbeln, beispielsweise Kühlschränken oder -truhen oder von Heißwasserspeichern, mit PU-Hartschaumstoff als Wärmedämmstoff. Um Schaumfehlstellen zu vermeiden, muß hierzu das schäumfähige PU-Reaktionsgemisch innerhalb einer kurzen Zeit in den zu isolierenden Hohlraum eingefüllt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühl- oder Heizungstechnik wurde z.B. publiziert in Polyurethane, Kunststoff-Handbuch, Band 7, 1. Auflage 1966, herausgegeben von Dr. R. Vieweg und Dr. A. Höchtlen, und 2. Auflage 1983, herausgegeben von Dr. Günter Oertel, Carl Hanser Verlag, München, Wien.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und/oder Polyether-polyole, sowie üblicherweise unter Mitverwendung von niedermolekularen Kettenverlängerungsmitteln und/oder Vernetzungsmitteln in Gegenwart von Treibmitteln, Katalysatoren oder gegebenenfalls Hilfsmitteln und/oder Zusatzstoffen hergestellt werden. Bei geeigneter Wahl der Aufbaukomponenten können hierbei PU-Hartschaumstoffe erhalten werden mit einer niedrigen Wärmeleitzahl und guten mechanischen Eigenschaften.

Als Treibmittel zur Herstellung der wärme- und kältedämmenden PU-Hartschaumstoffe wurden weltweit in großem Maßstabe Fluorchloralkane (FCKW), vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Es hat daher nicht an Versuchen gefehlt, die FCKW durch Treibmittel, die nur geringe oder zweckmäßigerweise keine Umweltschäden verursachen, zu ersetzen.

Nach Angaben der EP-A-351 614 (US-A-4 972 002) können als Treibmittel fluorierte Kohlenwasserstoffe, perfluorierte Kohlenwasserstoffe, Schwefelhexafluorid oder Mischungen aus mindestens zwei dieser Verbindungen verwendet werden. Da diese fluorierten oder perfluorierten Treibmittel in den Aufbaukomponenten zur Herstellung der Polyisocyanat-Polyadditionsprodukte schwer- oder unlöslich sind, werden sie in mindestens einem organischen und/oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig an diesem Verfahren ist lediglich die geringe Auswahl an geeigneten fluorierten oder perfluorierten Verbindungen mit einem Siedepunkt in dem erforderlichen Siedepunktsbereich und der hohe Preis für diese Treibmittel. Um zellhaltige Kunststoffe mit der technisch gewünschten Zellstruktur zu erhalten, ist man auf eine eng begrenzte Auswahl von Mischungen aus Perfluorpentan und Perfluorhexan angewiesen.

Zur Herstellung von zellhaltigen Kunststoffen nach dem Polyisocyanat-Polyadditionsverfahren haben sich nach Angaben der DE-A-41 43 148 als Treibmittel (d), gegebenenfalls in Verbindung mit Wasser, auch sehr gut Mischungen bewährt, die enthalten mindestens eine niedrigsiedende, in den Aufbaukomponenten (a), (b) oder (c) schwer- oder unlösliche, fluorierte oder perfluorierte, organische Verbindung und mindestens ein Isoalkan mit 6 bis 12 Kohlenstoffatomen.

In EP-A-483 431 werden Polyurethan-Hartschaumstoffe beschrieben, bei deren Herstellung als Polyole Polyetheralkohole, die mit Polyphenylenpolymethylenpolyaminen gestartet sind und als Treibmittel halogenierte Kohlenwasserstoffe eingesetzt werden.

PU-Hartschaumstoffe mit geringer Wärmeleitfähigkeit werden ferner in der EP-A-0 421 269 (US-A-5 096 933) beschrieben. Als Treibmittel verwendet werden, vorzugsweise in Kombination mit Wasser, Cyclopentan oder Mischungen, zweckmäßigerweise mit einem Siedepunkt unter 50°C, die enthalten:
Cyclopentan und/oder Cyclohexan und mindestens eine inerte, niedrigsiedende, mit Cyclopentan und/oder Cyclohexan homogen mischbare Verbindung, vorzugsweise aus der Gruppe der Alkane, Cycloalkane mit maximal 4 Kohlenstoffatomen, Dialkylether, Cycloalkylenether und Fluoralkane.

Durch eine geeignete Auswahl der Treibmittel, die als Zellgas über einen beträchtlichen Zeitraum im PU-Hartschaumstoff verbleiben, da ihre Diffusionsrate sehr gering ist, insbesondere, wenn die PU-Hartschaumstoffe allseitig mit Kunststoff- oder Metalldeckschichten versehen sind, konnte die Wärmeleitfähigkeit der PU-Hartschaumstoffe beträchtlich vermindert werden.

Da der Wärmetransport von einer warmen zu einer kalten Stelle in einem Schaumstoff beispielsweise über die Schaumstoffmatrix, über das Zellgas und durch Strahlung erfolgen kann, besteht weiterhin das Bedürfnis, die Wärmeleitfähigkeit von PU-Hartschaumstoffen durch geeignete Maßnahmen zu minimieren und dadurch den Energieverbrauch, z.B. in Kühlmöbeln, oder die Wärmeabgabe, z.B. von (Fern)heizungssystemen und Warmwasserspeichern durch Dämmelemente zu verringern.

Die Aufgabe der vorliegenden Erfindung bestand darin, die Wärmeleitfähigkeit von PU-Hartschaumstoffen weiter zu reduzieren. Hierbei sollte auf die Verwendung von toxischen und/oder umweltschädlichen Treibmitteln möglichst vollständig verzichtet werden. Die Polyol- und Polyisocyanatkomponenten (A) bzw. (B) sollten lagerbeständig sein und die Reaktionsmischung zur Herstellung der PU-Hartschaumstoffe sollte sehr gut fließfähig sein und schrumpffrei aushärten. Beim Ausschäumen von Gehäuseteilen sollte ein starker Verbund zwischen Deckschicht und PU-Hartschaumstoff entstehen.

Diese Aufgabe konnte überraschenderweise gelöst werden durch die Verwendung von organischen Polyisocyanaten und einem Polyether-polyol mit einer Funktionalität von 2 bis 8 und einer Hydroxylzahl von 100 bis 850, der hergestellt wird durch anionische Polyaddition von mindestens einem Alkylenoxid an mindestens eine, mindestens eine Hydroxyl-, Amino- und/oder Carboxylgruppen aufweisende aromatische Verbindung mit mindestens 2 reaktiven Wasserstoffatomen als Startermolekül.

Gegenstand der Erfindung ist somit ein Verfahren zur Herstellung von Polyurethan-Hartschaumstoffen mit einer Wärmeleitfähigkeit von kleiner 0.020 W/mK durch Umsetzung von
a) organischen und/oder modifizierten organischen Polyisocyanaten mit
b) mindestens einem Polyether-polyol mit einer Funktionalität von 2 bis 8 und einer Hydroxylzahl von 100 bis 850, der hergestellt wird durch anionische Polyaddition von mindestens einem Alkylenoxid an mindestens eine, mindestens eine Hydroxyl-, Amino- und/oder Carboxylgruppen aufweisende aromatische Verbindung mit mindestens 2 reaktiven Wasserstoffatomen als Startermolekül, und gegebenenfalls
c) niedermolekularen Kettenverlängerungs- und/oder Vernetzungsmitteln
   in Gegenwart von
d) Treibmitteln,
e) Katalysatoren und gegebenenfalls
f) Zusatzstoffen,
das dadurch gekennzeichnet ist, daß die Polyurethan-Hartschaumstoffe einen Gehalt an aromatischen Resten von mindestens 32 Masse-%, vorzugsweise mindestens 33 bis 50 und mehr Masse-% und insbesondere 34 bis 40 Masse-% besitzen, die in den Aufbaukomponenten (a) oder (b) oder gegebenenfalls (c) oder in mindestens zwei der Aufbaukomponenten (a), (b) und (c) gebunden sind und als Treibmittel in Verbindung mit Wasser Cyclopentan verwendet wird.

Nach einer bevorzugten Ausführungsform werden zur Herstellung der PU-Hartschaumstoffe mit einem Gehalt an aromatischen Resten von mindestens 32 Masse-% nach dem erfindungsgemäßen Verfahren als organische Polyisocyanate (a), vorzugsweise aromatische Polyisocyanate und als Komponente (b) ein Polyether-polyol mit einer Funktionalität von 2 bis 8 und einer Hydroxylzahl von 100 bis 850, der hergestellt wird durch anionische Polyaddition von mindestens einem Alkylenoxid an mindestens eine, mindestens eine Hydroxyl-, Amino- und/oder Carboxylgruppen aufweisende aromatische Verbindung mit mindestens 2 reaktiven Wasserstoffatomen als Startermolekül verwendet, so daß die Aufbaukomponenten (a) und (b) aromatische Reste in die PU-Hartschaummatrix einbringen. Nach anderen Verfahrensvarianten kann jedoch der Gehalt an aromatischen Resten von mindestens 32 Masse-% im PU-Hartschaumstoff auch ausschließlich aus den Polyether polyolen (b) und/oder niedermolekularen Kettenverlängerungs- und/oder Vernetzungsmitteln resultieren.

Durch das erfindungsgemäße Verfahren kann die Wärmeleitfähigkeit der PU-Hartschaumstoffe um mindestens 0,5 und mehr mW/mK reduziert werden, wobei die Verminderung unter sonst gleichen Bedingungen üblicherweise 1 bis 2 mW/mK beträgt. Durch die Erhöhung der aromatischen Anteile im PU-Hartschaumstoff wird jedoch nicht nur die Wärmeleitfähigkeit vermindert, sondern es wird auch allgemein sein mechanisches Eigenschaftsniveau erhöht, wobei speziell die Verbesserung der Flammwidrigkeit und des Alterungsverhaltens erwähnenswert sind. Vorteilhaft ist ferner, daß die Verträglichkeit und Mischbarkeit der Aufbaukomponenten (a), (b), (e) und gegebenenfalls (c) und/oder (f) untereinander und mit den verwendeten Treibmitteln (d), erhöht und die Fließfähigkeit der Reaktionsmischung verlängert wird.

Zur Herstellung der PU-Hartschaumstoffe nach dem erfindungsgemäßen Verfahren können die an sich bekannten Aufbaukomponenten Verwendung finden, wobei solche mit einem hohen Gehalt an aromatischen Gruppen zur Erzielung eines Gehalts von mindestens 32 Masse-% im PU-Hartschaumstoff bevorzugt sind. In Mischung mit den vorzugsweise aromatische Gruppen gebunden enthaltenden Aufbaukomponenten oder als alleinige Einsatzstoffe sind jedoch auch Aufbaukomponenten (a) bis (c) verwendbar, die keine aromatische Gruppen besitzen, mit der Maßgabe, daß die gebildeten PU-Hartschaumstoffe mindestens 32 Masse-% aromatische Reste gebunden enthalten.

Im einzelnen möchten wir zu den Aufbaukomponenten folgendes ausführen:
a) Als organische Polyisocyanate kommen die an sich bekannten aliphatischen, cycloaliphatischen, araliphatischen und vorzugsweise aromatischen mehrwertigen Isocyanate in Betracht.
   Im einzelnen seien beispielhaft genannt: Alkylendiisocyanate mit 4 bis 12 Kohlenstoffatomen im Alkylenrest, wie z.B. 1,12-Dodecan-diisocyanat, 2-Ethyl-tetramethylen-diisocyanat-1,4, 2-Methyl-pentamethylen-diisocyanat-1,5, 2-Ethyl-2-butyl-pentamethylen-diisocyanat-1,5, Tetramethylendiisocyanat-1,4 und vorzugsweise Hexamethylen-diisocyanat-1,6; cycloaliphatische Diisocyanate, wie z.B. Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate, wie z.B. l,4-Xylylen-diisocyanat und Xylylen-diisocyanat-Isomerengemische und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Die organischen Polyisocyanate können nach bekannten Verfahren hergestellt werden. Vorzugsweise werden sie hergestellt durch Phosgenierung der entsprechenden Polyamine zur Bildung von Polycarbaminsäurechloriden und deren thermische Spaltung bei erhöhten Temperaturen in das organische Polyisocyanat und Chlorwasserstoff oder nach phosgenfreien Verfahren, z.B. durch Umsetzung der entsprechenden Polyamine mit Harnstoff und Alkohol zu Polycarbaminsäureestern und deren thermische Spaltung bei erhöhten Temperaturen in das Polyisocyanat und Alkohol.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Uretonimin-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylen-glykolen, Trialkylen-glykolen oder Polyoxyalkylenglykolen mit Molekulargewichten bis 6000 modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/ oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/ oder vorzugsweise Polyether-polyolen und 4,4'-Diphenylmethandiisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung der PU-Hartschaumstoffe: Mischungen aus modifizierten Urethangruppen enthaltenden organischen Polyisocyanaten mit einem NCO-Gehalt von 33,6 bis 15 Gew.-%, insbesondere solchen auf Basis von Toluylen-diisocyanaten, 4,4'-Diphenylmethan-diisocyanat, Diphenylmethan-diisocyanat-Isomerengemischen oder Roh-MDI und insbesondere 4,4'-, 2,4'- und 2,2'-Diphenylmethan-diisocyanat, Polyphenyl-polymethylen-polyisocyanat, 2,4- und 2,6-Toluylen-diisocyanat, Roh-MDI mit einem Diphenylmethan-diisocyanat-Isomerengehalt von 30 bis 80 Gew.-%, vorzugsweise von 35 bis 45 Gew.-% und Mischungen aus mindestens zwei der genannten Polyisocyanate, z.B. Roh-MDI oder Mischungen aus Toluylen-diisocyanaten und Roh-MDI.
b) Als Polyether polyole (b) kommen Polyhydroxylverbindungen mit einer Funktionalität von 2 bis 8, vorzugsweise 3 bis 8 und einer Hydroxylzahl von 100 bis 850, vorzugsweise 120 und 770, in Betracht.
   Insbesondere werden als Polyether-polyole solche verwendet, die nach einem bekannten Verfahren durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls aus einer mindestens eine Hydroxyl-, Amino- und/oder Carboxylgruppen aufweisenden aromatischen Verbindung, die 2 bis 8, vorzugsweise 3 bis 8 reaktive Wasserstoffatome gebunden enthält, hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: organische Dicarbonsäuren, wie z.B., Phthalsäure und Terephthalsäure, aromatische, gegebenenfalls N-mono-, N,N- und N,N'-dialkylsubstituierte Diamine mit 1 bis 4 Kohlenstoffatomen im Alkylrest, wie z.B. Phenylendiamine, 2,3-, 2,4-, 3,4- und 2,6-Toluylendiamin und 4,4'-, 2,4'- und 2,2'-Diamino-diphenylmethan.
   Als Startermoleküle kommen ferner in Betracht: mehrwertige Phenole, wie z.B. 4,4'-Dihydroxydiphenylmethan und 4,4'-Dihydroxy-diphenylpropan-2,2. Resole, wie z.B. oligomere Kondensationsprodukte aus Phenol und Formaldehyd und Mannich-Kondensate aus Phenolen, Formaldehyd und Dialkanolaminen sowie Melamin.
   Als Polyether polyole (b) verwendet werden Polyether-polyole mit einer Funktionalität von 2 bis 8 und einer Hydroxylzahl von 100 bis 850, die hergestellt werden durch anionische Polyaddition von mindestens einem Alkylenoxid, vorzugsweise Ethylenoxid oder 1,2-Propylenoxid oder 1,2-Propylenoxid und Ethylenoxid, an mindestens eine, mindestens eine Hydroxyl-, Amino- und/oder Carboxylgruppen aufweisende aromatische Verbindung mit mindestens zwei reaktiven Wasserstoffatomen als Startermoleküle. Als derartige Startermoleküle beispielhaft genannt seien aromatische Polycarbonsäuren, wie z.B. Hemimellithsäure, Trimellithsäure, Trimesinsäure und vorzugsweise Phthalsäure, Isophthalsäure und Terephthalsäure oder Mischungen aus mindestens zwei der genannten Polycarbonsäuren, Hydroxycarbonsäuren wie z.B. Salicylsäure, p- und m-Hydroxybenzoesäure und Gallussäure, Aminocarbonsäuren, wie z.B. Anthranilsäure, m- und p-Aminobenzoesäure, Polyphenole, wie z.B. Resorcin und vorzugsweise Dihydroxy-diphenyl-methane und -propane-2,2, Mannich-Kondensate aus Phenolen, Formaldehyd und Dialkanolaminen, vorzugsweise Diethanolamin, und vorzugsweise aromatischen Polyamine, wie z.B. 1,2-, 1,3- und 1,4-Phenylen-diamin und insbesondere 2,3-, 2,4-, 3,4- und 2,6-Toluylendiamin, 4,4'-, 2,4'- und 2,2'-Diamino-diphenylmethan, Polyphenyl-polymethylen-polyamine, Mischungen aus Diamino-diphenylmethanen und Polyphenyl-polymethylen-polyaminen wie sie z.B. durch Kondensation von Anilin mit Formaldehyd gebildet werden, und Mischungen aus mindestens zwei der genannten Polyamine.
   Die Herstellung von Polyether-polyolen unter Verwendung derartiger mindestens difunktioneller aromatischer Startermoleküle ist bekannt und wird beispielsweise beschrieben in den Patentpublikationen DD-A-290 201, DD-A-290 202, DE-A-34 12 082, DE-A-4 232 970 und GB-A-2 187 449.
   Die Polyether-polyole besitzen eine Funktionalität von vorzugsweise 3 bis 8 und insbesondere 3 und 6 und Hydroxylzahlen von vorzugsweise 120 bis 770 und insbesondere 240 bis 570.
   Als Polyether-polyole eignen sich ferner Melamin-Polyetherpolyol-Dispersionen gemäß EP-A-23 987 (US-A-4 293 657), Polymer-Polyetherpolyol-Dispersionen, hergestellt aus Polyepoxiden und Epoxidharzhärtern in Gegenwart von Polyether-polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyhydroxylverbindungen gemäß EP-A-11 751 (US 42 43 755), Polyharnstoff-Polyether-polyol-Dispersionen gemäß DE-A-31 25 402, Tris-(hydroxyalkyl)isocyanurat-Polyether-polyol-Dispersionen gemäß EP-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind.
   Die Polyether-polyole können einzeln oder in Form von Mischungen verwendet werden.
   Als Polyether polyole (b) eignen sich ferner phenolische und halogenierte phenolische Polyole, wie z.B. Benzylethergruppen aufweisende Resol-polyole. Resol-polyole dieser Art können beispielsweise hergestellt werden aus Phenol, Formaldehyd, zweckmäßigerweise Paraformaldehyd und mehrwertigen aliphatischen Alkoholen und werden z.B. beschrieben in den EP-A-0 116 308 und EP-A-0 116 310.
   Als höhermolekulare Verbindungen (b) insbesondere verwendet werden Mischungen aus Polyether-polyolen, die enthalten mindestens ein Polyether-polyol auf Basis eines aromatischen, polyfunktionellen Startermoleküls und mindestens ein Polyether-polyol auf Basis eines nichtaromatischen Startermoleküls, vorzugsweise eines 3- bis 8-wertigen Alkohols.
c) Die PU-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden, vorzugsweise Alkanolamine und insbesondere Diole und/oder Triole mit Molekulargewichten kleiner als 400, vorzugsweise 60 bis 300. In Betracht kommen beispielsweise Alkanolamine, z.B. Ethanolamin und/oder Isopropanolamin, Dialkanolamine wie z.B. Diethanolamin, N-Methyl-, N-Ethyldiethanolamin, Diisopropanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-hydroxyethyl)ethylendiamin und N,N,N',N'-Tetra(2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.
   Sofern zur Herstellung der PU-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Polyhydroxylverbindung zum Einsatz.
d) Als Treibmittel zur Herstellung der PU-Hartschaumstoffe findet Cyclopentan (dl) Verwendung. Sehr gut bewährt haben sich jedoch auch Mischungen (d2), die enthalten Cyclopentan und mindestens eine mit Cyclopentan homogen mischbare Verbindung, vorzugsweise einer Verbindung mit einem Siedepunkt unter 40°C, wobei die erhaltenen Mischungen einen Siedepunkt < 50°C haben. Die als Treibmittel geeigneten Verbindungen der genannten Art können ausgewählt werden aus der Gruppe der Alkane, Cycloalkane mit maximal 4 Kohlenstoffatomen, Dialkylether, Cycloalkylenether und Fluoralkane. Verwendbar sind auch Mischungen aus mindestens zwei Verbindungen der genannten Verbindungsgruppen. Beispielhaft genannt seien im einzelnen: Alkane, wie z.B. Propan, n-Butan, Isobutan, n- und iso-Pentan sowie technische Pentangemische, Cycloalkane, wie z.B. Cyclobutan, Dialkylether, wie z.B. Dimethylether, Methylethylether, Methylbutylether oder Diethylether, Cycloalkylenether, wie z.B. Furan, und Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorpropan.
   Die bevorzugt verwendeten Treibmittel werden in Verbindung mit Wasser verwendet, wobei sich folgende Kombinationen vorzüglich bewährt haben, so daß sie zweckmäßigerweise eingesetzt werden: Wasser und Cyclopentan, Wasser und Cyclopentan und mindestens eine Verbindung aus der Gruppe n-Butan, Isobutan, n- und iso-Pentan, technische Pentangemische, Cyclobutan, Methylbutylether, Diethylether, Furan, Trifluormethan, Difluormethan, Difluorethan, Tetrafluorethan und Heptafluorpropan. Die in Kombination mit Cyclopentan eingesetzte Menge an niedrigsiedenden, mit Cyclopentan homogen mischbaren Verbindungen wird so bemessen, daß die erhaltene Mischung vorteilhafterweise einen Siedepunkt von unter 50°C, vorzugsweise von 30 bis 0°C besitzt. Die hierfür erforderliche Menge ist abhängig von dem Verlauf der Siedepunktskurven der Mischung und kann nach bekannten Methoden experimentell ermittelt werden. PU-Hartschaumstoffe mit geringer Leitfähigkeit werden insbesondere dann erhalten, wenn als Treibmittel (d) pro 100 Gew.-Teile der Aufbaukomponente (b) verwendet werden:
   d1) 3 bis 22 Gew.-Teile, vorzugsweise 5 bis 18 Gew.-Teile und insbesondere 8 bis 14 Gew.-Teile Cyclopentan und 0 bis 7 Gew.-Teile, vorzugsweise 1,0 bis 5,0 Gew.-Teile und insbesondere 2,2 bis 4,5 Gew.-Teile Wasser oder
   d2i) 2 bis 22 Gew.-Teile, vorzugsweise 5 bis 19 Gew.-Teile und insbesondere 9 bis 19 Gew.-Teile Cyclopentan,
   d2ii) 0,1 bis 18 Gew.-Teile, vorzugsweise 0,5 bis 10 Gew.-Teile und insbesondere 1,0 bis 6,0 Gew.-Teile mindestens einer mit Cyclopentan homogen mischbaren Verbindung mit einem Siedepunkt unter 40°C, ausgewählt aus der Gruppe Alkane, Cycloalkane mit maximal 4 C-Atomen, Dialkylether, Cycloalkylenether und vorzugsweise Fluoralkane und
      0 bis 7 Gew.-Teile, vorzugsweise 1,0 bis 5,0 Gew.-Teile und insbesondere 2,2 bis 4,5 Gew.-Teile Wasser.
   Zur Herstellung der PU-Hartschaumstoffe wird das Cyclopentan (d1) oder die Treibmittelmischung (d2) in Verbindung mit Wasser nach an sich bekannten Methoden mindestens einer Aufbaukomponente (a) bis (c) zur Herstellung des PU-Hartschaumstoffs, gegebenenfalls unter Druck, einverleibt oder es wird direkt der Reaktionsmischung, zweckmäßigerweise mittels einer geeigneten Mischvorrichtung, zugeführt.
   Treibmittel der genannten Art werden beschrieben z.B. in der EP-A-0 421 269 (US-A-5,096,933), die in vollem Umfange als Bestandteil der Patentbeschreibung zu betrachten ist.
e) Als Katalysatoren (e) werden insbesondere Verbindungen verwendet, die Reaktion der Hydroxylgruppen enthaltenden Verbindungen der Komponenten (b) und gegebenenfalls (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 1, 8-Diaza-bicyclo(5.4.0)-undecen-7, 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin oder -hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere 1,3,5-Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2,5 Gew.-% Katalysator bzw. Katalysatorkombination bezogen auf das Gewicht der Komponente (b).
f) Der Reaktionsmischung zur Herstellung der PU-Hartschaumstoffe können gegebenenfalls auch noch Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel, fungistatisch und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Hartschaumstoffes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxid und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-(2-chlorpropyl)phosphat, Tris (1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe werden die organischen, gegebenenfalls modifizierten Polyisocyanate (a), die Polyether polyole (b) und gegebenenfalls Kettenverlängerungsmittel und/ oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,80:1, vorzugsweise 0,95 bis 1,35:1 und insbesondere ungefähr 1,0 bis 1,15:1, beträgt. Sofern die Urethangruppen enthaltende Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (a) zur Summe der reaktiven Wasserstoffatome der Komponente (b) und gegebenenfalls (c) von 1,8 bis 10:1, vorzugsweise 2,0 bis 6:1 angewandt.

Die PU-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Aufbaukomponente (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU-Hartschaumstoff aushärten.

Die nach dem erfindungsgemäßen Verfahren hergestellten PU-Hartschaumstoffe mit einem Gehalt an aromatischen Resten von mindestens 32 Masse-%, vorzugsweise von mindestens 33 Masse-% besitzen vorzugsweise Dichten von 20 bis 50 g/l und eine Wärmeleitfähigkeit von kleiner 0,020, beispielsweise von 0,020 bis 0,017 W/m·K und weniger.

Die PU-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner zur Isolierung von erwärmten Materialien, als Motorabdeckung und als Rohrschalen.

### Beispiele

### Herstellung der PU-Hartschaumstoffe

### Vergleichsbeispiel I

A-Komponente: Mischung, die bestand aus

| | |
|---|---|
| 63,5 | Gew.-Teilen eines Polyether-polyols der Hydroxylzahl 440, hergestellt durch anionische Polyaddition von 1,2-Propylenoxid an Saccharose, |
| 15,0 | Gew.-Teilen eines Polyether-polyols der Hydroxylzahl 400, hergestellt durch anionische Polyaddition von 1,2-Propylenoxid an Sorbit, |
| 10,0 | Gew.-Teilen eines Polyether-polyols der Hydroxylzahl 120, hergestellt durch anionische Polyaddition von 1,2-Propylenoxid an N-(3-Dimethylaminopropyl)ethylendiamin und anschließende anionische Polyaddition von Ethylenoxid an das erhaltene N-(3-Dimethylaminopropyl)-ethylendiamin-1,2-Propylenoxid-Addukt, |
| 5,0 | Gew.-Teilen Polyoxypropylen-glykol der Hydroxylzahl 250, |
| 1,5 | Gew.-Teilen eines Schaumstabilisators auf Silikonbasis (Tegostab® B 8462 der Goldschmidt AG, Essen), |
| 2,2 | Gew.-Teilen N,N-Dimethylcyclohexylamin, |
| 0,5 | Gew.-Teilen einer 47 gew.-%igen Lösung von Kaliumacetat in Ethylen-glykol, |
| 2,0 | Gew.-Teilen Wasser und |
| 11,0 | Gew.-Teilen Cyclopentan. |

Komponente B:
Mischung aus Diphenylmethandiisocyanaten und Polyphenyl-polymethylen-polyisocyanaten (Roh-MDI) mit einem NCO-Gehalt von 31,5 Masse-% und einem Gehalt an aromatischen Resten von ca. 56 Masse-%.

| | |
|---|---|
| 100 | Gew.-Teile der A-Komponente und |
| 125 | Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38 g/l und einer Wärmeleitfähigkeit von 20,5 mW/mK, gemessen bei 23°C. Der Gehalt an aromatischen Resten in den Aufbaukomponenten (a) bis (c) betrug 31 Masse-%. |

### Beispiel 1

A-Komponente: Mischung, die bestand aus

| | |
|---|---|
| 63,5 | Gew.-Teilen eines Polyether-polyols der Hydroxylzahl 440, hergestellt durch anionische Polyaddition von 1,2-Propylenoxid an Saccharose, |
| 15,0 | Gew.-Teilen eines Polyether-polyols der Hydroxylzahl 550 und mit einem Gehalt an aromatischen Resten von ca. 11 Masse-%, hergestellt durch anionische Polyaddition von 1,2-Propylenoxid an ein Mannich-Kondensat, erhältlich aus 4,4'-Dihydroxy-diphenylpropan-2,2, Formaldehyd und Diethanolamin, als Startermolekül, |
| 10,0 | Gew.-Teilen eines Polyether-polyols der Hydroxylzahl 120, hergestellt durch anionische Polyaddition von 1,2-Propylenoxid an N-(3-Dimethylaminopropyl)ethylendiamin und anschließende anionische Polyaddition von Ethylenoxid an das erhaltene N-(3-Dimethylaminopropyl)-ethylendiamin-1,2-Propylenoxid-Addukt, |
| 5,0 | Gew.-Teilen Polyoxypropylen-glykol der Hydroxylzahl 250, |
| 1,5 | Gew.-Teilen eines Schaumstabilisators auf Silikonbasis (Tegostab® B 8462 der Goldschmidt AG, Essen), |
| 2,2 | Gew.-Teilen N,N-Dimethylcyclohexylamin, |
| 0,5 | Gew.-Teilen einer 47 gew.-%igen Lösung von Kaliumacetat in Ethylen-glykol, |
| 2,0 | Gew.-Teilen Wasser und |
| 11,0 | Gew.-Teilen Cyclopentan. |

Komponente B:
Mischung aus Diphenylmethandiisocyanaten und Polyphenyl-polymethylen-polyisocyanaten (Roh-MDI) mit einem NCO-Gehalt von 31,5 Masse-% und einem Gehalt an aromatischen Resten von ca. 56 Masse-%.

| | |
|---|---|
| 100 | Gew.-Teile der A-Komponente und |
| 130 | Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38 g/l und einer Wärmeleitfähigkeit von 19,7 mW/mK, gemessen bei 23°C. Der Gehalt an aromatischen Resten in den Aufbaukomponenten (a) bis (c) betrug 32,4 Masse-%. |

### Beispiel 2

A-Komponente: Mischung, die bestand aus

| | |
|---|---|
| 48,5 | Gew.-Teilen eines Polyether-polyols der Hydroxylzahl 440, hergestellt durch anionische Polyaddition von 1,2-Propylenoxid an Saccharose, |
| 30,0 | Gew.-Teilen eines Polyether-polyols der Hydroxylzahl 550 und mit einem Gehalt an aromatischen Resten von ca. 11 Masse-%, hergestellt durch anionische Polyaddition von 1,2-Propylenoxid an ein Mannich-Kondensat, erhältlich aus 4,4'-Dihydroxy-diphenylpropan-2,2, Formaldehyd und Diethanolamin, als Startermolekül, |
| 10,0 | Gew.-Teilen eines Polyether-polyols der Hydroxylzahl 120, hergestellt durch anionische Polyaddition von 1,2-Propylenoxid an N-(3-Dimethylaminopropyl)ethylendiamin und anschließende anionische Polyaddition von Ethylenoxid an das erhaltene N-(3-Dimethylaminopropyl)-ethylendiamin-1,2-Propylenoxid-Addukt, |
| 5,0 | Gew.-Teilen Polyoxypropylen-glykol der Hydroxylzahl 250, |
| 1,5 | Gew.-Teilen eines Schaumstabilisators auf Silikonbasis (Tegostab® B 8462 der Goldschmidt AG, Essen), |
| 2,2 | Gew.-Teilen N,N-Dimethylcyclohexylamin, |
| 0,5 | Gew.-Teilen einer 47 gew.-%igen Lösung von Kaliumacetat in Ethylen-glykol, |
| 2,0 | Gew.-Teilen Wasser und |
| 11,0 | Gew.-Teilen Cyclopentan. |

B-Komponente: analog Beispiel 1.

| | |
|---|---|
| 100 | Gew.-Teile der A-Komponente und |
| 133 | Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38,7 g/l und einer Wärmeleitfähigkeit von 19,0 mW/mK, gemessen bei 23°C. Der Gehalt an aromatischen Resten in den Aufbaukomponenten (a) bis (c) betrug 33,4 Masse-%. |

### Beispiel 3 (nicht erfindungsgemäß)

A-Komponente: Mischung, die bestand aus

| | |
|---|---|
| 55,9 | Gew.-Teilen eines Polyether-polyols mit der Hydroxylzahl von 370 und einem Gehalt an aromatischen Resten von 19,3 Gew.-%, hergestellt durch anionische Polykondensation von 1,2-Propylenoxid an eine Mischung aus Diamino-diphenylmethan-Isomeren und Polyphenyl-polymethylen-polyaminen, |
| 37,0 | Gew.-Teilen eines Polyether-polyols mit der Hydroxylzahl von 340, hergestellt durch anionische Polyaddition von 1,2-Propylenoxid an Sorbit, |
| 3,0 | Gew.-Teilen eines Schaumstabilisators auf Silikonbasis (Tegostab® B 8465 der Goldschmidt AG, Essen), |
| 1,3 | Gew.-Teilen N,N-Dimethylcyclohexylamin, |
| 0,7 | Gew.-Teilen N,N,N',N",N"-Pentamethyl-diethylentriamin, |
| 0,3 | Gew.-Teilen Dikaliumhydrogenphosphat, |
| 1,8 | Gew.-Teilen Wasser und |
| 13,0 | Gew.-Teilen Cyclopentan. |

B-Komponente: analog Beispiel 1

| | |
|---|---|
| 100 | Gew.-Teile der A-Komponente und |
| 110 | Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 36 g/l und einer Wärmeleitfähigkeit von 20,0 mW/mK, gemessen bei 23°C. Der Gehalt an aromatischen Resten in den Aufbaukomponenten (a) bis (c) betrug 34,5 Masse-%. |

### Beispiel 4

A-Komponente: analog Beispiel 3
B-Komponente: analog Beispiel 1

| | |
|---|---|
| 100 | Gew.-Teile der A-Komponente und |
| 130 | Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38 g/l und einer Wärmeleitfähigkeit von 19,2 mW/mK, gemessen bei 23°C. Der Gehalt an aromatischen Resten in den Aufbaukomponenten (a) bis (c) betrug 36,5 Masse-%. |

### Beispiel 5

A-Komponente: Mischung, die bestand aus

| | |
|---|---|
| 30,0 | Gew.-Teilen eines Polyether-polyols mit der Hydroxylzahl von 350 und einem Gehalt an aromatischen Resten von 11,4 Gew.-%, hergestellt durch Blockcopolyaddition von 1,2-Propylenoxid (50 Gew.-%) und Ethylenoxid (50 Gew.-%) an eine Toluylendiamin-Isomerenmischung als Startermoleküle, |
| 23,7 | Gew.-Teilen eines Polyether-polyols der Hydroxylzahl 440, hergestellt durch anionische Polyaddition von 1,2-Propylenoxid an Saccharose, |
| 20,0 | Gew.-Teilen eines Polyether-polyols der Hydroxylzahl 550 und mit einem Gehalt an aromatischen Resten von ca. 11 Masse-%, hergestellt durch anionische Polyaddition von 1,2-Propylenoxid an ein Mannich-Kondensat, erhältlich aus 4,4'-Dihydroxy-diphenylpropan-2,2, Formaldehyd und Diethanolamin, als Startermolekül, |
| 20,0 | Gew.-Teilen eines Polyether-polyols der Hydroxylzahl 120, hergestellt durch anionische Polyaddition von 1,2-Propylenoxid an N-(3-Dimethylaminopropyl)ethylendiamin und anschließende anionische Polyaddition von Ethylenoxid an das erhaltene N-(3-Dimethylaminopropyl)-ethylendiamin-1,2-Propylenoxid-Addukt, |
| 3,0 | Gew.-Teilen eines Schaumstabilisators auf Silikonbasis (Tegostab® B 8465 der Goldschmidt AG, Essen) |
| 1,0 | Gew.-Teilen N,N-Dimethylcyclohexylamin, |
| 0,5 | Gew.-Teilen N,N,N",N",N"-Pentamethyl-diethylentriamin, |
| 1,8 | Gew.-Teilen Wasser und |
| 13,0 | Gew.-Teilen Cyclopentan. |

B-Komponente: analog Beispiel 1

| | |
|---|---|
| 100 | Gew.-Teile der A-Komponente und |
| 123 | Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 35 g/l und einer Wärmeleitfähigkeit von 19,5 mW/mK, gemessen bei 23°C. Der Gehalt an aromatischen Resten in den Aufbaukomponenten (a) bis (c) betrug 33,4 Masse-%. |

### Beispiel 6

A-Komponente: analog Beispiel 5
B-Komponente: analog Beispiel 1

| | |
|---|---|
| 100 | Gew.-Teile der A-Komponente und |
| 145 | Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 37 g/l und einer Wärmeleitfähigkeit von 18,8 mW/mK, gemessen bei 23°C. Der Gehalt an aromatischen Resten in den Aufbaukomponenten (a) bis (c) betrug 35,4 Masse-%. |

### Beispiel 7

A-Komponente: Mischung, die bestand aus

| | |
|---|---|
| 20,0 | Gew.-Teilen eines Polyester-polyols mit einer Hydroxylzahl von 240 und einem Gehalt an aromatischen Resten von ca. 25 Masse-%, hergestellt durch Polykondensation von Phthalsäureanhydrid, Ethylenglykol und Diethylenglykol im Masseverhältnis 43:5:52. |
| 43,6 | Gew.-Teilen eines Polyether-polyols der Hydroxylzahl 490, hergestellt durch anionische Polyaddition von 1,2-Propylenoxid an Saccharose, |
| 20,0 | Gew.-Teilen eines Polyether-polyols der Hydroxylzahl 570 und mit einem Gehalt an aromatischen Resten von ca. 11,4 Masse-%, hergestellt durch anionische Polyaddition von 1,2-Propylenoxid an ein Mannich-Kondensat, erhältlich aus 4,4'-Dihydroxy-diphenylpropan-2,2, Formaldehyd und Diethanolamin, als Startermolekül, |
| 10,0 | Gew.-Teilen eines Polyether-polyols der Hydroxylzahl 770, hergestellt durch anionische Polyaddition von 1,2-Propylenoxid an Ethylen-diamin als Startermolekül, |
| 2,5 | Gew.-Teilen eines Schaumstabilisators auf Silikonbasis (Tegostab® B 8465 der Goldschmidt AG, Essen), |
| 1,4 | Gew.-Teilen N,N-Dimethylcyclohexylamin, |
| 0,7 | Gew.-Teilen 2,2'-Bis(dimethylamino)-diethylether, |
| 1,8 | Gew.-Teilen Wasser und |
| 13,0 | Gew.-Teilen Cyclopentan. |

B-Komponente: analog Beispiel 1

| | |
|---|---|
| 100 | Gew.-Teile der A-Komponente und |
| 130 | Gew.-Teile der B-Komponente wurden in einem Hochdruck-Puromat® PU 15 gemischt und die Reaktionsmischung in eine Bosch-Lanze eingespritzt. Man erhielt einen gleichmäßigen PU-Hartschaumstoff mit einem Raumgewicht von ca. 37 g/l und einer Wärmeleitfähigkeit von 18,9 mW/mK, gemessen bei 23°C. Der Gehalt an aromatischen Resten in den Aufbaukomponenten (a) bis (c) betrug 34,8 Masse-%. |

### Vergleichsbeispiel II

A-Komponente: Mischung, die bestand aus

| | |
|---|---|
| 43,15 | Gew.-Teilen eines Polyether-polyols der Hydroxylzahl 440, hergestellt durch anionische Polyaddition von 1,2-Propylenoxid an Saccharose, |
| 20,0 | Gew.-Teilen eines Polyether-polyols der Hydroxylzahl 490, hergestellt durch anionische Polyaddition von 1,2-Propylenoxid an Saccharose, |
| 12,0 | Gew.-Teilen Polyoxypropylen-glykol der Hydroxylzahl 105, |
| 1,2 | Gew.-Teilen eines Schaumstabilisators auf Silikonbasis (Tegostab® B 8409 der Goldschmidt AG, Essen), |
| 0,9 | Gew.-Teilen 1,6-Bis- (dimethylamino)-hexan, |
| 0,4 | Gew.-Teilen 1,3,5-Tris(3-dimethylaminopropyl-)hexahydro-striazin, |
| 0,4 | Gew.-Teilen N,N-Dimethylcyclohexylamin, |
| 0,3 | Gew.-Teilen einer 75 gew.-%igen Lösung von 2,2'-Bis-(dimethylamino)-diethylether in Dipropylenglykol, |
| 1,65 | Gew.-Teilen Wasser und |
| 20,0 | Gew.-Teilen 1,1-Dichlor-1-fluorethan (R141b). |

B-Komponente: analog Beispiel 1

| | |
|---|---|
| 100 | Gew.-Teile der A-Komponente und |
| 116 | Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38 g/l und einer Wärmeleitfähigkeit von 19 mW/mK, gemessen bei 23°C. Der Gehalt an aromatischen Resten in den Aufbaukomponenten (a) bis (c) betrug 30,0 Masse-%. |

### Vergleichsbeispiel III

A-Komponente: Mischung, die bestand aus

| | |
|---|---|
| 30,0 | Gew.-Teile eines Polyether-polyols der Hydroxylzahl 400 und mit einem Gehalt an aromatischen Resten von 13,4 Gew.-%, hergestellt durch Blockcopolyaddition von 1,2-Propylenoxid (70 Gew.-%) und Ethylenoxid (30 Gew.-%) an eine Toluylendiamin-Isomerenmischung als Startermoleküle, |
| 22,5 | Gew.-Teilen eines Polyether-polyols der Hydroxylzahl 490, hergestellt durch anionische Polyaddition von 1,2-Propylenoxid an Saccharose, |
| 20,0 | Gew.-Teilen eines Polyether-polyols der Hydroxylzahl 550 und mit einem Gehalt an aromatischen Resten von ca. 11 Masse-%, hergestellt durch anionische Polyaddition von 1,2-Propylenoxid an ein Mannich-Kondensat, erhältlich aus 4,4'-Dihydroxy-diphenylpropan-2,2, Formaldehyd und Diethanolamin als Startermolekül, |
| 15,0 | Gew.-Teilen eines Polyether-polyols der Hydroxylzahl 120, hergestellt durch anionische Polyaddition von 1,2-Propylenoxid an N-(3-Dimethylaminopropyl)-ethylendiamin und anschließende anionische Polyaddition von Ethylenoxid an das erhaltene N-(3-Dimethylaminopropyl)-ethylendiamin-1,2-Propylenoxid-Addukt, |
| 5,0 | Gew.-Teilen Polyoxypropylen-glykol der Hyroxylzahl 250, |
| 3,0 | Gew.-Teilen eines Schaumstabilisators auf Silikonbasis (Tegostab® B8465 der Goldschmidt AG, Essen), |
| 0,7 | Gew.-Teilen N,N,N',N",N"-Pentamethyl-diethylentriamin, |
| 0,5 | Gew.-Teilen N,N-Dimethylcyclohexylamin, |
| 0,5 | Gew.-Teilen einer 42 gew.-%igen Lösung eines Salzes aus einem Trimethylamin-1,2-Propylenoxid-Addukt und Ameisensäure in Dipropylenglykol, |
| 2,5 | Gew.-Teilen Wasser und |
| 20,0 | Gew.-Teilen 1,1-Dichlor-1-fluorethan (R141b). |

B-Komponente: analog Beispiel 1

| | |
|---|---|
| 100 | Gew.-Teile der A-Komponente |
| 140 | Gew.-Teile der B-Komponente wurden in einem Hochdruck-Puromat® PU 15 gemischt und die Reaktionsmischung in eine Bosch-Lanze eingespritzt. Man erhielt einen gleichförmigen PU-Hartschaumstoff mit einem Raumgewicht von ca. 38 g/l und einer Wärmeleitfähigkeit von 17,5 mW/mK, gemessen bei 23°C. Der Gehalt an aromatischen Resten in den Aufbaukomponenten (a) bis (c) betrug 34,8 Masse-%. |

## Patentansprüche

1. Verfahren zur Herstellung von Polyurethan-Hartschaumstoffen mit einer Wärmeleitfähigkeit von kleiner 0,020 W/mK durch Umsetzung von
a) organischen und/oder modifizierten organischen Polyisocyanaten mit
b) mindestens einem Polyether-polyol mit einer Funktionalität von 2 bis 8 und einer Hydroxylzahl von 100 bis 850, der hergestellt wird durch anionische Polyaddition von mindestens einem Alkylenoxid an mindestens eine, mindestens eine Hydroxyl-, Amino- und/oder Carboxylgruppen aufweisende aromatische Verbindung mit mindestens 2 reaktiven Wasserstoffatomen als Startermolekül, und gegebenenfalls
c) niedermolekularen Kettenverlängerungs- und/oder Vernetzungsmitteln
in Gegenwart von
d) Treibmitteln,
e) Katalysatoren und gegebenenfalls
f) Zusatzstoffen,
**dadurch gekennzeichnet, daß** die Polyurethan-Hartschaumstoffe einen Gehalt an aromatischen Resten von mindestens 32 Masse-% besitzen, die in den Aufbaukomponenten (a), (b) und/oder gegebenenfalls (c) gebunden sind und als Treibmittel in Verbindung mit Wasser Cyclopentan verwendet wird.

2. Verfahren nach Anspruch 1, **dadurch gekennzeichnet, daß** man als organische Polyisocyanate (a) aromatische Polyisocyanate ausgewählt aus der Gruppe 4,4'-, 2,4'- und 2,2'-Diphenylmethan-diisocyanat, Polyphenyl-polymethylen-polyisocyanate, Mischungen aus Diphenylmethan-diisocyanaten und Polyphenyl-polymethylen-polyisocyanaten mit einem Diphenylmethan-diisocyanat-Isomerengehalt von 30 bis 80 Gew.-%, 2,4- und 2,6-Toluylen-diisocyanat und Mischungen aus mindestens zwei der genannten Polyisocyanate verwendet.

3. Verfahren nach Anspruch 1 oder 2, **dadurch gekennzeichnet, daß** man als höhermolekulare Verbindungen (b) Polyhydroxylverbindungen mit einer Funktionalität von 2 bis 8 und einer Hydroxylzahl von 100 bis 850 verwendet.

4. Verfahren nach einem der Ansprüche 1 bis 3, **dadurch gekennzeichnet, daß** man als höhermolekulare Verbindungen (b) Polyether-polyole mit einer Funktionalität von 2 bis 8 und einer Hydroxylzahl von 100 bis 850 verwendet, die hergestellt werden durch anionische Polyaddition von mindestens einem Alkylenoxid an mindestens ein aromatisches Startermolekül aus der Gruppe der aromatischen Polycarbonsäuren, aromatischen Hydroxycarbonsäuren und aromatischen Aminocarbonsäuren, der aromatischen Mono- und Polyamine, der Polyphenole und der Mannich-Kondensate aus Phenolen, Formaldehyd und Dialkanolaminen.

5. Verfahren nach Anspruch 4, **dadurch gekennzeichnet, daß** man als Startermoleküle aromatische Polyamine aus der Gruppe der 1,2-, 1,3- und 1,4-Phenylendiamine, 2,3-, 2,4-, 3,4- und 2,6-Toluylendiamine, 4,4'-, 2,4'- und 2,2-Diamino-diphenylmethan, Polyphenyl-polymethylen-polyamine und Mischungen aus mindestens zwei der genannten Polyamine verwendet.

6. Verfahren nach einem der Ansprüche 4 bis 5, **dadurch gekennzeichnet, daß** man als Alkylenoxide 1,2-Propylenoxid und/oder Ethylenoxid verwendet.

7. Verfahren nach einem der Ansprüche 1 bis 6, **dadurch gekennzeichnet, daß** man als Treibmittel (d) in Verbindung mit Wasser Mischungen enthaltend Cyclopentan und damit homogen mischbare Verbindungen mit einem Siedepunkt der Mischungen < 50°C verwendet.

## Claims

1. A process for producing rigid polyurethane foams having a thermal conductivity of less than 0.020 W/mK by reacting
a) organic and/or modified organic polyisocyanates with
b) at least one polyether polyol having a functionality of from 2 to 8 and a hydroxyl number of from 100 to 850 and prepared by anionic polyaddition of at least one alkylene oxide onto at least one aromatic compound containing at least one hydroxyl, amino and/or carboxyl group and having at least 2 reactive hydrogen atoms as starter molecule and, if desired,
c) low molecular weight chain extenders and/or crosslinkers
in the presence of
d) blowing agents,
e) catalysts and, if desired,
f) additives,
wherein the rigid polyurethane foams contain at least 32% by mass of aromatic radicals present in bound form in the formative components (a), (b) and/or, if used, (c) and the blowing agent used is cyclopentane in combination with water.

2. The process according to claim 1, wherein organic polyisocyanates (a) used are aromatic polyisocyanates selected from the group consisting of diphenylmethane 4,4'-, 2,4'- and 2,2'-diisocyanate, polyphenylpolymethylene polyisocyanates, mixtures of diphenylmethane diisocyanates and polyphenylpolymethylene polyisocyanates having a diphenylmethane diisocyanate isomer content of from 30 to 80% by weight, 2,4- and 2,6-tolylene diisocyanate and mixtures of at least two of the polyisocyanates mentioned.

3. The process according to claim 1 or 2, wherein relatively high molecular weight compounds (b) used are polyhydroxyl compounds having a functionality of from 2 to 8 and a hydroxyl number of from 100 to 850.

4. The process according to any of claims 1 to 3, wherein relatively high molecular weight compounds (b) used are polyether polyols having a functionality of from 2 to 8 and a hydroxyl number of from 100 to 850 and prepared by anionic polyaddition of at least one alkylene oxide onto at least one aromatic starter molecule selected from the group consisting of aromatic polycarboxylic acids, aromatic hydroxycarboxylic acids and aromatic aminocarboxylic acids, aromatic monoamines and polyamines, polyphenols and Mannich condensates of phenols, formaldehyde and dialkanolamines.

5. The process according to claim 4, wherein starter molecules used are aromatic polyamines selected from the group consisting of 1,2-, 1,3- and 1,4-phenylenediamines, 2,3-, 2,4-, 3,4- and 2,6-tolylenediamines, 4,4'-, 2,4'- and 2,2-diaminodiphenylmethane, polyphenylpolymethylenepolyamines and mixtures of at least two of the polyamines mentioned.

6. The process according to any of claims 4 to 5, wherein alkylene oxides used are 1,2-propylene oxide and/or ethylene oxide.

7. The process according to any of claims 1 to 6, wherein mixtures comprising cyclopentane and compounds which are homogeneously miscible therewith and give mixtures having a boiling point of < 50°C in combination with water are used as blowing agents (d).

## Revendications

1. Procédé pour la production de mousses rigides de polyuréthanne ayant une conductivité thermique inférieure à 0,020 W/mK, par mise en réaction
a) de polyisocyanates organiques et/ou à modification organique avec
b) au moins un polyéther-polyol ayant une fonctionnalité de 2 à 8 et un indice de groupes hydroxy de 100 à 850, qui est préparé par polyaddition anionique d'au moins un oxyde d'alkylène sur au moins un composé aromatique comportant au moins un groupe hydroxy, amino et/ou carboxy, et comportant au moins 2 atomes d'hydrogène réactifs, en tant que molécule d'amorçage, et éventuellement
c) des prolongateurs de chaîne et/ou agents de réticulation de faible masse moléculaire
en présence
d) d'agents d'expansion,
e) de catalyseurs et éventuellement
f) d'additifs,
**caractérisé en ce que** les mousses rigides de polyuréthanne ont une teneur en radicaux aromatiques d'au moins 32 % en masse, qui sont liés aux composants constitutifs (a), (b) et/ou éventuellement (c) et **en ce qu'**on utilise comme agent d'expansion du cyclopentane en association avec de l'eau.

2. Procédé selon la revendication 1, **caractérisé en ce qu'**on utilise comme polyisocyanates organiques (a) des polyisocyanates aromatiques choisis dans le groupe constitué par le 4,4'-, le 2,4'- et le 2,2'-diphénylméthane-diisocyanate, des polyphényl-polyméthylène-polyisocyanates, des mélanges de diphénylméthane-diisocyanates et polyphényl-polyméthylène-polyisocyanates ayant une teneur en isomères de diphénylméthane-diisocyanate de 30 à 80 % en poids, le 2,4- et le 2,6-toluylène-diisocyanate et des mélanges d'au moins deux des polyisocyanates cités.

3. Procédé selon la revendication 1 ou 2, **caractérisé en ce qu'**on utilise comme composés (b) de masse moléculaire élevée des composés polyhydroxylés ayant une fonctionnalité de 2 à 8 et un indice de groupes hydroxy de 100 à 850.

4. Procédé selon l'une quelconque des revendications 1 à 3, **caractérisé en ce qu'**on utilise comme composés (b) de masse moléculaire élevée des polyéther-polyols ayant une fonctionnalité de 2 à 8 et un indice de groupes hydroxy de 100 à 850, qui sont préparés par polyaddition anionique d'au moins un oxyde d'alkylène sur au moins une molécule aromatique d'amorçage choisie dans le groupe des acides polycarboxyliques aromatiques, des acides hydroxycarboxyliques aromatiques et des acides aminocarboxyliques aromatiques, des mono- et polyamines aromatiques, des polyphénols et des produits de condensation de Mannich à base de phénols, formaldéhyde et dialcanolamines.

5. Procédé selon la revendication 4, **caractérisé en ce qu'**on utilise comme molécules d'amorçage des polyamines aromatiques choisies dans le groupe des 1,2-, 1,3- et 1,4-phénylènediamines, 2,3-, 2,4-, 3,4- et 2,6-toluylènediamines, 4,4'-, 2,4'- et 2,2-diamino-diphénylméthane, polyphényl-polyméthylène-polyamines et des mélanges d'au moins deux des polyamines citées.

6. Procédé selon l'une quelconque des revendications 4 et 5, **caractérisé en ce qu'**on utilise comme oxydes d'alkylène l'oxyde de 1,2-propylène et/ou l'oxyde d'éthylène.

7. Procédé selon l'une quelconque des revendications 1 à 6, **caractérisé en ce qu'**on utilise comme agent d'expansion (d) en association avec de l'eau des mélanges contenant du cyclopentane et des composés miscibles de façon homogène à celui-ci, ayant un point d'ébullition des mélanges < 50 °C.
